# EUROPEAN PATENT SPECIFICATION

(11) **EP 1 435 613 B1**
(45) Date of publication and mention of the grant of the patent: **08.04.2009**
(21) Application number: 03257627.4
(22) Date of filing: 03.12.2003
(51) Int. Cl.: G11B 15/665

(54) **Tape deck**
Bandlaufwerk
Appareil à bande

(30) Priority: 31.12.2002 KR 2002088238
(43) Date of publication of application: 07.07.2004
(73) Proprietor: SAMSUNG ELECTRONICS CO., LTD., Suwon 442-742, Gyeonggi-do (KR)
(72) Inventor: Kim, Bong-joo, Suwon-city, Gyunggi-do (KR); Sim, Jae-hoon, Paldal-gu, Suwon-city, Gyunggi-do (KR); Kim, Jun-young, 212-1301, Hangook Apartmet, Suwon-city, Gyunggi-do (KR)
(74) Representative: Grey, Ian Michael

(56) References cited:
- EP-A- 1 400 965
- EP-A- 1 435 614
- EP-A1- 0 620 551
- JP-A- 8 293 142

## Description

The present invention relates to a tape deck comprising a head drum, first and second pole base loading mechanisms, each comprising a gear and a pole base loading arm fixed thereto, a main gear for driving the pole base loading mechanisms and at least one other mechanism, wherein the main gear directly engages the gear of the first pole base loading mechanism and the gear of the first pole base loading mechanism is toothed so as to form a sector gear means which engages with the main gear during only a part of the rotational range of the main gear.

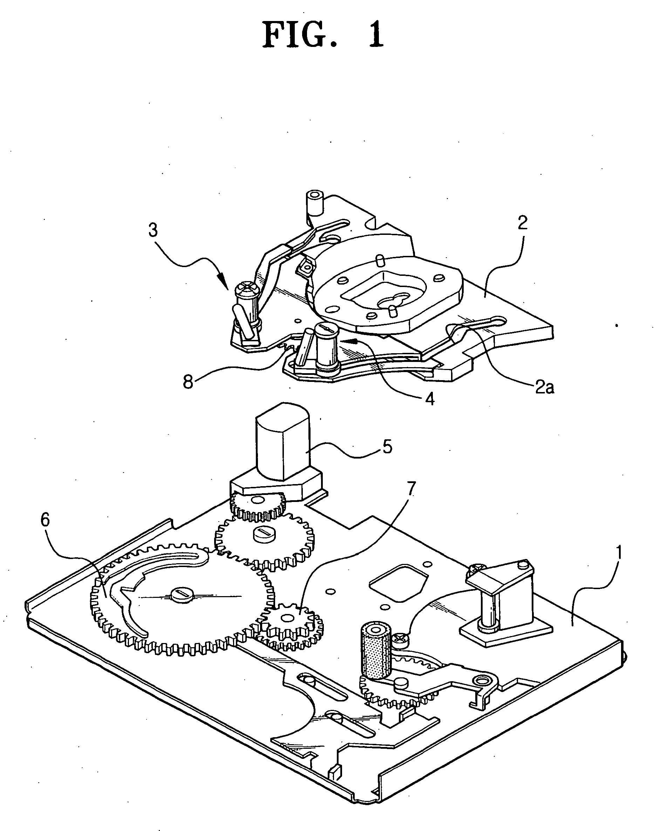

Figure 1 is an exploded perspective view partially showing the deck of a camcorder which is used here as an example of a conventional magnetic recording/playback apparatus.

Referring to Figure 1, a drum 2 is mounted on a main deck 1. A head drum (now shown) is rotatably disposed on the drum base 2. The head drum contacts a magnetic tape withdrawn from a tape cassette and records and reads information on the tape. On the main deck 1, there is provided a pair of movable pole-base assemblies 3,4 for withdrawing tape from a cassette and then partially wrapping around the head drum. In other words, the pole-base assemblies 3,4 are moved between unloaded and loaded positions along a guide slot 2a provided in the drum base 2. The pole-base assemblies 3,4 may be of various types.

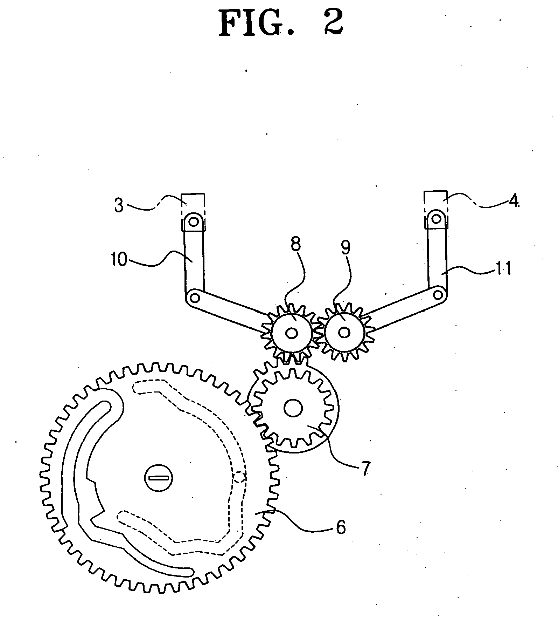

The camcorder further includes a driving apparatus for moving the pole-base assemblies 3,4 between their loaded and unloaded positions. Power from a motor 5, disposed on the main deck 1, is transferred to a main gear 6 on the main deck 1. As shown in Figure 2, a relay gear 7, engaged with the main gear 6, transfers power to a first loading gear 8 and then to a second loading gear 9. The first loading gear 8 and second loading gear 9 are engaged with each other. Link members 10,11 are connected to the first and second loading gears 8,9 respectively and are adapted to move respective pole base assemblies 3,4 between their loaded and unloaded positions by rotation of the loading gears 8,9.

However, in a conventional pole-base assembly driving apparatus having the construction described above, there is a problem in that the driving apparatus occupies a large space and has a complicated structure, sinc the main gear 6, the relay gear 7 and the loading gears 8,9 are respectively disposed at desired positions and then interlocked with each other. In particular, there is a problem in that the number of components is large and thus the manufacturing costs and the number of assembling processes are higher. Such a known conventional tape deck is disclosed in JP 08 293142.

A tape deck according to the present invention is characterised in that the main gear has a non-toothed region and the gear of the first pole base loading mechanism has a non-toothed region, said non-toothed regions being configured such that they frictionally engage one another during part of the rotation range of the main gear when the sector gear means is out of engagement with the main gear.

Preferably, the main gear has first and second circumferentially spaced teeth and the gear of the first pole base loading mechanism has first and second circumferentially spaced troughs, siad teeth being axially disposed relative to said sector gear means and said teeth and troughts being arranged such that, during rotation of the main gear for loading, said first tooth is received by said first trough and subsequently said second tooth is received by said second trough.

Preferably, the gear of the second pole base loading mechanism is directly driven by the gear of the first pole base loading mechanism.

An embodiment of the present invention will now be described, by way of example, with reference to Figures 3 to 7 of the accompanying drawings, in which:
Figure 1 is an exploded perspective view of the deck of a conventional magnetic recording/playback apparatus;
Figure 2 is a schematic partial view showing part of the deck shown in Figure 1;
Figure 3 is a schematic plan view showing a pole-base assembly driving arrangement;
Figure 4 is a perspective view showing a part of the arrangement in Figure 3; and
Figures 5-7 are plan views illustrating stages in the operation of the pole-base assembly driving arrangement.

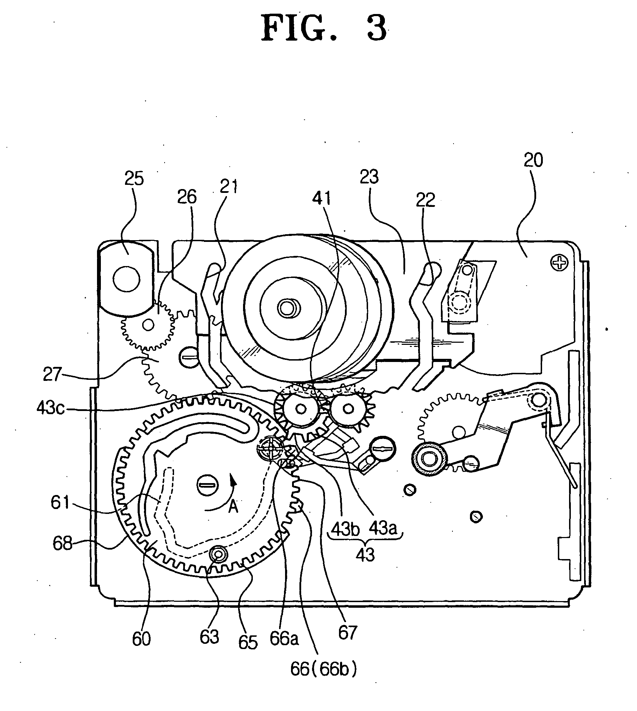

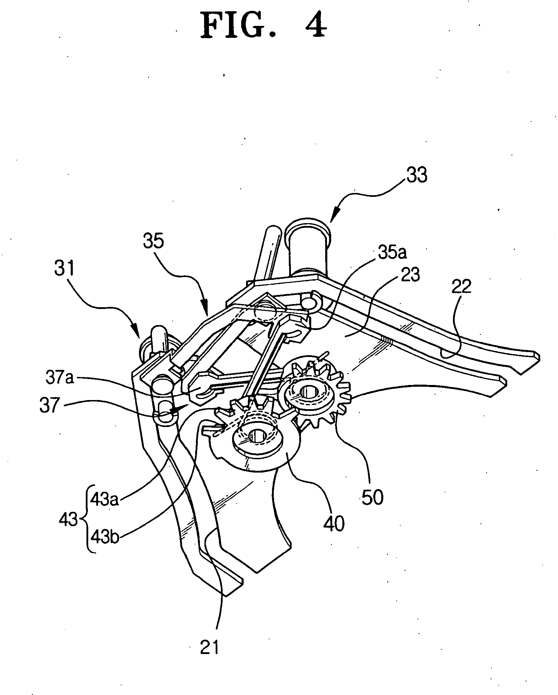

Referring to Figures 3 and 4, a pole-base assembly driving apparatus loads and unloads first and second pole-base assembly 31, 33. When the pole-base assemblies are moved to their loaded positions, they travel along respective guide slots 21, 22 and a magnetic tape is thereby withdrawn from a cassette and partially wrapped around a head drum (not shown).

First and second link members 35, 37 are connected respectively to the first and second pole-base assemblies 31, 33. First and second loading gears 40, 50 are connected to respective ones of the first and second link members 35, 37 and a main gear 60, rotatably mounted on the main deck 20, is configured for engagement with the first loading gear 40 during part of its rotational range.

The first and second loading gears 40, 50 are rotatably disposed on a plate 23 in which the guide slots 21, 22 are formed. The first and second loading gears 40, 50 are engaged with each other.

One end of the first link member 35 is fixed to the first loading gear 40 and the other end is rotatably connected to the first pole-base assembly 31. The first link member 35 has a joint 35a midway along its length. When the first loading gear 40 is rotated, it allows the first link member 35 to unfold so that the pole-base assembly 31 is driven along the first guide slot 21.

One end of the second link member 37 is fixed to the second loading gear 50 and the other end is rotatably connected to the second pole-base assembly 33. The second link member 37 also has a joint 37a midway along its length.

The first loading gear 40 is provided with a first toothed part 41 engaged with the second loading gear 50 and a second toothed part 43 which engages with the main gear 60. The first and second toothed parts 41, 43 are positioned one above the other with the radius of the second toothed part 43 being greater than that of the first toothed part 41. The first toothed part 41 is positioned above the second gear part 43.

A gear tooth 43a is formed in the second toothed part 43 such that the second toothed part 43 is engaged with the main gear 60 when a particular part of the main gear 60 is opposite the second toothed part 43. On both sides of the gear tooth 43a, there are troughs 43b formed to receive teeth of the main gear 60 which. are relatively deep and large.

The main gear 60 is rotatably mounted on the main deck 20 so as to transfer the power to the first loading gear 40 during part of its rotation. The main gear 60 receives power from the driving motor 25, mounted on the main deck 20, through a plurality of power transmission gears 26, 27. A cain groove 61 is formed in the underside of the main gear 60 and controls the movement of a sliding member (not shown). The sliding member is connected to a review arm unit and a reel brake (not shown) and is reciprocated right and left on the main deck by the cam groove 60. A guide pin 63 protrudes upwards from the main gear 60 and is received by a sub deck (not shown) mounted on the main deck 20. Consequently, the sub deck is moved back and forth between unloaded and loaded positions, i.e. towards the head drum and away from the head drum, while supporting a cassette tape by rotation of the main gear 60.

The main gear 60 rotates in the direction A during loading operation and rotates in direction B during unloading operation. The main gear is provided with a main toothed part 65 that engages the power transmission gear 27, and a pair of large gear teeth 66 which larger than the teeth of the main gear part 65 and positioned below the main gear part 65. The main gear 60 is further provided with a connecting gear part 67 which is positioned below the main toothed part 65 between the large gear teeth 66. The main gear 60 also has a slide wing part 68 which is formed out of the connecting gear part 67 and the large gear teeth 66 so as to have the same height as the large gear teeth 66.

The large gear teeth 66 are set apart from each other so as to correspond to the large troughs 43b of the loading gear 40. Of course, the large gear teeth 66 are formed to protrude at a position lower than the main toothed part 65, i.e. at a position lower than the power transmission gear 27, and thus they are prevented from interfering with the power transmission gear 27. The large gear teeth 66 do not interfere with the first toothed part 41 of the loading gear 40 and engage the second toothed part 43. The connecting gear part 67 is formed in the region between the large teeth 66 and is also integrally formed with the main toothed part 65 with the same radius. The connecting gear part 67 engages the gear tooth 43a of the second toothed part 43 of the first loading gear 40. The slide wing part 68 is formed in the outer circumference of the main gear 60 so as to have the same height as the connecting gear part 67 and the large gear teeth 66. In addition, the slide wing part 68 protrudes in the form of an arc so as to have a larger diameter than the main toothed part 65. Therefore, the slide wing part 68 slides past a non-toothed part 43c of the second gear part 43. Therefore, when the main gear 60 is not engaged with the first loading gear 40, the slide wing part 68 is maintained in sliding contact with the non-toothed part 43c.

Operation of the pole-base assembly driving apparatus will now be described.

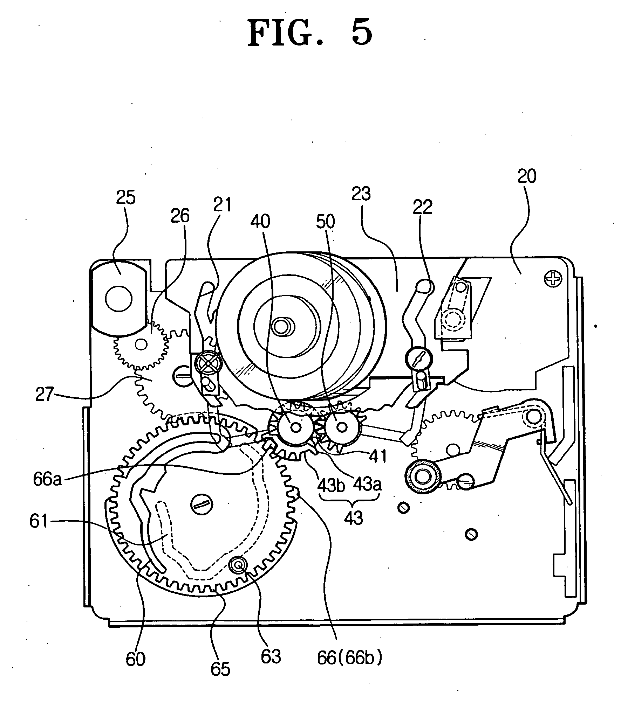

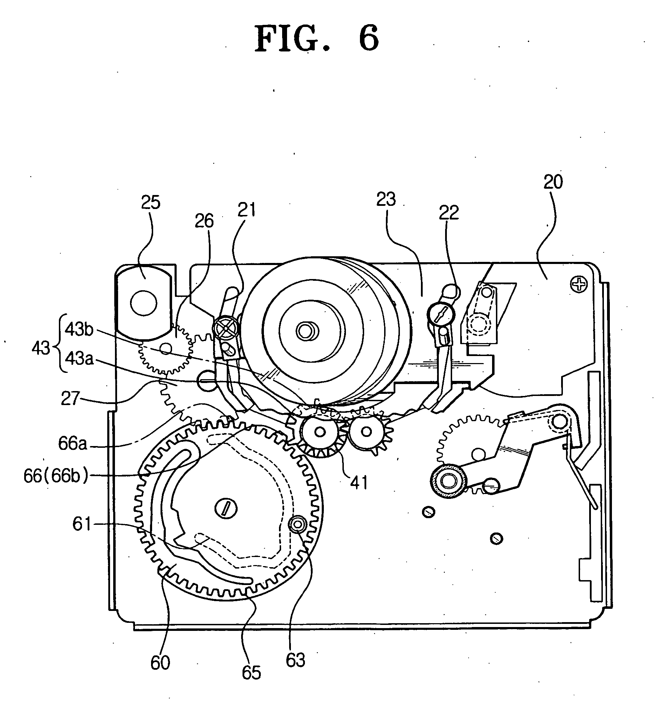

Referring to Figure 3, when the pole-base assembly driving arrangement is in its poles unloaded state at the start of tape loading, the main gear 60 is rotated in direction A by the driving motor 25. The sub deck is then moved towards the head drum by the guide pin 63 on the main gear 60. In this process, as shown in Figure 5, the large gear tooth 66a of the main gear 60 is engaged with the trough 43b of the first loading gear 40. Consequently, the second toothed part 43 of the first loading gear 40 is engaged with the main toothed part 65 of the main gear 60. Then, as shown in Figure 6, when, after further rotation of the main gear 60, the other large gear tooth 66b is out of the other trough 43b, the engagement of the main gear 60 and the first loading gear 40 is ended.

As described above, while the first loading gear 40 is engaged with the main gear 60, it is rotated for a desired time through a desired angle and the second loading gear 50 is also rotated. As the loading gears 40, 50 are rotated, the first and second link members 35, 37 are rotated and unfold. The pole-base assemblies 31, 33 are thereby moved along the guide slots 21, 22.

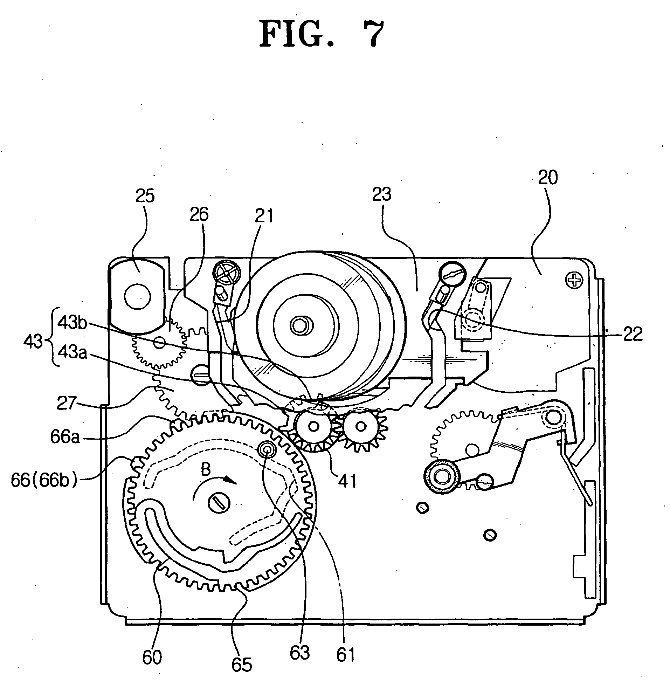

In this situation, the main gear 60 is adapted to be further rotated, as shown in Figure 7. However, since the first loading gear 40 is disengaged from the main gear 60, the first loading gear 40 is not rotated any longer and only the main gear 60 is rotated further. The slide wing part 68 maintains contact with the non-toothed part 43c of the second loading gear 40. Therefore, the free rotation of the first loading gear 40 is restricted by friction between the slide wing part 68 and the non-toothed part 43c. Each of the pole-base assemblies 31, 33 is maintained at the correct position.

As described above, since the main gear 60 is connected to the sub deck and the slide wind part is directly engaged with the first loading gear 40, the structure is simplified and the number of components is reduced. Further, the assembling process becomes simpler, and manufacturing costs are also reduced.

When the deck is in its tape loaded state, rotation of the main gear 60 in direction B as in Figure 7, the first loading gear 40 can be rotated within only a desired region in the reverse order of the loading operation. Therefore, the loading and unloading operations can be performed with the simple structure.

In the pole-base assembly driving apparatus for the magnetic recording/reading apparatus, the main gear is directly engaged with the loading gear. However, the power is transferred only in a desired region. Therefore, the loading/unloading operation of the pole-base assembly can be performed with a simple structure.

Therefore, since the number of components is reduced and the structure can be simplified, the number of assembling processes and a manufacturing cost can be reduced.

## Claims

1. A tape deck comprising a head drum, first and second pole base loading mechanisms, each comprising a gear (40,50) and a pole base loading arm (35,37) fixed thereto, a main gear (60) for driving the pole base loading mechanisms and at least one other mechanism, wherein the main gear (60) directly engages the gear (40) of the first pole base loading mechanism and the gear (40) of the first pole base loading mechanism is toothed so as to form a sector gear means (43a) which engages with the main gear (60) during only a part of the rotational range of the main gear (60), wherein the main gear (60) has a non-toothed region (68) and the gear (40) of the first pole base loading mechanism has a non-toothed region (43c), **characterised in that** said non-toothed regions (68,43c) are configured such that they frictionally engage one another during part of the rotation range of the main gear (60) when the sector gear means (43a) is out of engagement with the main gear (60).

2. A tape deck according to claim 1, wherein the main gear (60) has first and second circumferentially spaced teeth (66a,66b) and the gear (40) of the first pole base loading mechanism has first and second circumferentially spaced troughs (43b), said teeth (66a,66b) being axially displaced relative to said sector gear means (43a) and said teeth (66a,66b) and troughs (43b) being arranged such that, during rotation of the main gear (60) for loading, said first tooth (66a) is received by said first trough (43b) and subsequently said second tooth (66b) is received by said second trough (43b).

3. A tape deck according to claim 1 or claim 2, wherein the gear (50) of the second pole base loading mechanism is directly driven by the gear (40) of the first pole base loading mechanism.

## Patentansprüche

1. Kassettenlaufwerk, umfassend eine Kopftrommel, erste und zweite Fädelschlitten-Lademechanismen, die jeweils ein Zahnrad (40, 50) und einen daran befestigten Fädelschlitten-Ladearm (35, 37) umfassen, ein Hauptzahnrad (60) zum Antreiben der Fädelschlitten-Lademechanismen und wenigstens eines weiteren Mechanismus, wobei das Hauptzahnrad (60) direkt mit dem Zahnrad (40) des ersten Fädelschlitten-Lademechanismus in Eingriff ist und das Zahnrad (40) des ersten Fädelschlitten-Lademechanismus so gezahnt ist, dass es ein Zahnsegmentmittel (43a) bildet, das nur während eines Teils des Drehbereichs des Hauptzahnrads (60) mit dem Hauptzahnrad (60) kämmt, wobei das Hauptzahnrad (60) eine unverzahnte Region (68) hat und das Zahnrad (40) des ersten Fädelschlitten-Lademechanismus eine unverzahnte Region (43c) hat, **dadurch gekennzeichnet, dass** die genannten unverzahnten Regionen (68, 43c) so konfiguriert sind, dass sie während Teils des Drehbereichs des Hauptzahnrads (60) miteinander reibschlüssig sind, wenn das Zahnsegmentmittel (43a) außer Eingriff mit dem Hauptzahnrad (60) ist.

2. Kassettenlaufwerk nach Anspruch 1, bei dem das Hauptzahnrad (60) erste und zweite umfangsmäßig voneinander beabstandete Zähne (66a, 66b) hat und das Zahnrad (40) des ersten Fädelschlitten-Lademechanismus erste und zweite umfangsmäßig voneinander beabstandete Lücken (43b) hat, wobei die genannten Zähne (66a, 66b) relativ zu dem genannten Zahnsegmentmittel (43a) axial versetzt sind und wobei die genannten Zähne (66a, 66b) und Lücken (43b) so angeordnet sind, dass während der Rotation des Hauptzahnrads (60) zum Laden der genannte erste Zahn (66a) von der genannten ersten Lücke (43b) aufgenommen wird und nachfolgend der genannte zweite Zahn (66b) von der genannten zweiten Lücke (43b) aufgenommen wird.

3. Kassettenlaufwerk nach Anspruch 1 oder 2, bei dem das Zahnrad (50) des zweiten Fädelschlitten-Lademechanismus von dem Zahnrad (40) des ersten Fädelschlitten-Lademechanismus direkt angetrieben wird.

## Revendications

1. Platine d'enregistrement sur bande comprenant un tambour porte-têtes, des premier et deuxième mécanismes de chargement de guide de transfert, comprenant chacun un pignon (40, 50) et un bras de chargement de guide de transfert (35, 37) fixés à chacun, un pignon principal (60) pour entraîner les mécanismes de chargement de guide de transfert et au moins un autre mécanisme, dans laquelle le pignon principal (60) s'engage directement avec le pignon (40) du premier mécanisme de chargement de guide de transfert et le pignon (40) du premier mécanisme de chargement de guide de transfert est denté de manière à former un secteur denté (43a) qui s'engage avec le pignon principal (60) pendant seulement une partie de la plage de rotation du pignon principal (60), le pignon principal (60) ayant une zone non dentée (68) et le pignon (40) du premier mécanisme de chargement de guide de transfert ayant une zone non dentée (43c), **caractérisée en ce que** les zones non dentées (68, 43c) sont configurées de manière à s'engager l'une avec l'autre pendant une partie de la plage de rotation du pignon principal (60) lorsque le secteur denté (43a) n'est pas engagé avec le pignon principal (60).

2. Platine d'enregistrement sur bande selon la revendication 1, dans laquelle le pignon principal (60) a des première et deuxième dents espacées sur la circonférence (66a, 66B) et le pignon (40) du premier mécanisme de chargement de guide de transfert a des premier et deuxième creux (43b) espacés sur la circonférence, lesdites dents (66a, 66b) étant déplacées dans le sens axial par rapport au secteur denté (43a) et lesdites dents (66a, 66b) et lesdits creux (43b) étant agencés de telle sorte que, pendant la rotation du pignon principal (60) pour le chargement, ladite première dent (66a) est reçue par ledit premier creux (43b), puis ladite deuxième dent (66b) est reçue par ledit deuxième creux (43b).

3. Platine d'enregistrement sur bande selon la revendication 1 ou la revendication 2, dans laquelle le pignon (50) du deuxième mécanisme de chargement de guide de transfert est entraîné directement par le pignon (40) du premier mécanisme de chargement de guide de transfert.
